# EUROPEAN PATENT APPLICATION

(11) **EP 1 529 754 A1**
(43) Date of publication of application: **11.05.2005**
(21) Application number: 03292698.2
(22) Date of filing: 29.10.2003
(51) Int. Cl.: C01B 9/08, B22F 1/00

(54) **A method of producing a rounded powder of metal fluoride compounds**

(71) Applicant: Corning Incorporated, Corning, New York 14831 (US)
(72) Inventor: Fredholm, Allan, 77850 Hericy (FR)
(74) Representative: Reinhard - Skuhra - Weise & Partner

(57) **Abstract**

The invention is directed to an apparatus for dropping a liquefied metal fluoride from a heating zone and past one or more nozzles emitting a high velocity gas that atomizes the liquefied metal fluoride into small droplets and simultaneously cools the droplets. The droplets then proceed to fall through a cooling zone where they are further cooled and then collected in a container. The droplets are small, substantially spherical beads that can be packed into a crucible at a high apparent bulk density and used for growing metal fluoride single crystals. The invention is further directed to methods for preparing the small, spherical or substantially spherical beads.

## Description

### Field Of The Invention

The invention is directed to an apparatus and a method for producing a rounded powder (for example, small spherical or substantially spherical beads) of a metal fluoride compounds, particularly the Group IA and IIA alkali and alkaline earth metal fluorides.

### Background Of The Invention

The burden of the demands for improved performance of computers and other electronic devices falls on the lithographic processes used to fabricate integrated circuit chips. Lithography involves irradiating a mask and focusing the pattern of this mask through an optical microlithography system onto a wafer coated with a photoresist. The pattern on the mask is thereby transferred onto the wafer. Decreasing the line-widths of the features on a given wafer brings about advances in performance. The enhanced resolution required to achieve finer line-widths is enabled by decreasing the wavelength of the illumination source. As a result, the energies used in lithographic patterning are moving deeper into the UV region. Consequently, optical components capable of reliable performance at these short optical microlithography wavelengths are required.

Few materials are known that have a high transmittance at wavelengths below 200 nm, for example, at 193 nm and 157 nm, and also do not deteriorate under intense laser exposure. Fluoride crystals such as those of magnesium fluoride, calcium fluoride and barium fluoride are potential materials with high transmittance at wavelengths < 200 nm. Projection optical photolithography systems and < 200 nm excimer laser systems that utilize vacuum ultraviolet wavelengths of light at and below 200 nm provide desirable benefits in terms of achieving smaller feature dimensions. Excimer lasers and microlithography systems that utilize vacuum ultraviolet wavelengths in the 157 nm wavelength region have the potential of improving integrated circuits and their manufacture.

The commercial use and adoption of 193 nm and below vacuum ultraviolet wavelengths ("VUV") such as 157 nm wavelength has been hindered by the transmission nature of such deep ultraviolet wavelengths through optical materials. Such slow progression by the semiconductor industry of the use of VUV light below 200 nm such as the 157 nm region light has been also due to the lack of economically manufacturable, high quality blanks of optically transmissive materials suitable for microlithography optical elements for use with lasers operating below 200 nm. Consequently in order to utilize deep ultraviolet photolithography in the VUV region to manufacture integrated circuits using, for example, fluorine excimer lasers, there is a need for below 200 nm wavelength transmitting optical fluoride crystals such as those made from the fluorides of magnesium, calcium and barium. Such crystals must be of high quality, possess few defects and have beneficial, highly qualified optical including low contaminant levels. In addition, these crystals must be able to be economically manufactured, tested, evaluated, measured and qualified for use.

Single crystals of metal fluorides, for example, calcium and magnesium fluoride crystals, are grown using the Stockbarger technique or a modified version thereof called the Bridgman-Stockbarger technique. They are the materials of choice for preparing <200 nm UV optical lithography elements used in microlithography at 193 and 157 nm. Lenses and other optical elements made of these materials, particularly those made of calcium fluoride, have high transmission below 200 nm, good laser resistance, low birefringence, and exhibit minimal fluorescence. These crystals must be prepared in the absence of water, air and all sources of oxygen. This is well known to those skilled in the art. These single crystals are usually prepared in the presence of a fluorinating agent. PbF₂ is most commonly used as is well known in the art, though other fluorinating agents such as SnF₂ and CF₄ can also be used.

The process of growing large metal fluoride single crystals that are relatively free of defects typically lasts several weeks; particularly for high optical quality fluoride single crystals and below 200 nm optical lithography single crystal blanks. The cost of the equipment to produce high quality crystals, as well as the staging of the crystal-growth process, is high and there is no guarantee of having a successful result at the end of the growth process. Therefore, there has long been a concerted effort to increase the yield of high quality metal fluoride single crystals.

One problem that has been encountered is that of optimizing the mass of raw material feedstock introduced into the crystal growth furnace. In general, high purity metal fluoride powder, for example, calcium fluoride powder, has been used as the raw materials. Calcium fluoride powder has an apparent density of approximately 1.1 g/cm³, whereas the crystals produced in the growth furnace have an apparent density close to that of the theoretical maximum which is 3.18 g/cm³. Thus, when synthetic powder is used directly as the raw material, two-thirds of the volume of the crystal growth furnace is not used, or at least not used efficiently. The other metal fluorides exhibit a similar difference between the apparent density of a powder and a single crystal material.

It is known in the art to densify metal fluoride powders by subjecting them to a premelting step, typically with purification treatment, and then solidifying the material into a bulk form such as ingots or disks. The bulk material is then crushed and loaded into crucibles which are placed in a crystal growth furnace and used to grow a single crystal of a metal fluoride. The material solidified in this manner typically has an apparent bulk density of approximately 2 g/cm³. As a result of this process a significantly higher output of these furnaces is obtained. However, during this process there is a high risk of material contamination due to the crushing step. To avoid crushing, French Patent No. 2,799,194 (USA 6,451,106 B1) proposes a process consisting in solidifying the melted calcium fluoride as beads. These beads can be packed quite densely in the crucible, achieving an apparent bulk density on the order of 1.90 to 2.85 g/cm³. The output of growth furnaces is therefore improved without any need for crushing operation.

French Patent No. 2,799,194 describes a way to form such beads having a diameter greater than or equal to 100 um (0.01 cm) from a liquid melt. They are formed by the passage of a liquid melt of calcium fluoride through holes in the bottom of a crucible. At the exit of the holes, the liquid flow form drops which fall to the bottom of the furnace. The fall height must be sufficient for the initially liquid droplets to solidify before they reach the bottom of the furnace. Simple thermal calculations show that for beads of 3 mm diameter, a fall height of several tens of meters is necessary to solidify and cool the beads to a temperature of approx 1100°C where they can be allowed to touch each other without sticking together. Even for smaller beads, for example, those having a diameter of 0.25 mm, the drop height is predicted to exceed 5 meters.

It is the purpose of the present invention to provide practical means to obtain a rounded powder (for example, small spherical or substantially spherical particles) which pack densely without having to resort to high drop columns. It is also the purpose of the present invention to provide a process which has high output capability, compared to the drop by drop process of FR 2,799,194.

### Summary Of The Invention

In one embodiment the invention is directed to an apparatus for producing atomized particles of alkali and alkaline earth metal fluorides, the apparatus having a heating zone and a dropping zone. In the heating zone there is:
a furnace with heating elements for melting a metal fluoride powder; and
a crucible for containing the metal powder, the crucible having an opening in the bottom thereof for passage of the melted (liquefied) metal fluoride and a removable lid at the exit of said opening.

In the dropping zone there is:
a nozzle assembly located below and adjacent to the bottom of the opening for atomizing the melted metal fluoride, the nozzle assembly having one or a plurality of nozzles for projecting a high velocity gas stream toward melted metal fluoride exiting from the opening at the bottom of the crucible, a source of the gas and a gas connection from the gas source to the nozzles; and
a container forming a chamber for receiving solid particles of the atomized metal fluoride, the container having a height sufficient for allowing the atomized particles to cool to a temperature at which they will not agglomerate. The furnace of the apparatus may also have ports for the admission of temperature sensors and the entry and exit of gaseous materials, and a port in the top thereof for loading additional metal fluoride powder or premelted metal fluoride material into the crucible. The container may have a port in the bottom thereon for allowing solidified metal fluoride particles to be withdrawn from the chamber formed by the container.

The invention is also directed to a method for preparing metal fluoride particles, the method having the steps of:
providing a furnace for melting a metal fluoride;
placing a metal fluoride in a crucible having an opening in the bottom thereof;
melting said metal fluoride to provide a liquefied metal fluoride,
passing said liquefied metal fluoride through the opening in the bottom of the crucible;
contacting the liquefied metal fluoride emerging from the opening with a high velocity gas from nozzles located below the opening to thereby atomize the liquid;
allowing the atomized liquid to fall a distance sufficient for the atomized liquid to form solid particles and to reach a temperature such that the particles do not agglomerate; and
collecting the particles in a container.

In another embodiment the invention is directed to a modular apparatus for producing particles of alkali and alkaline earth metal fluorides, the modular apparatus having:
(a) an upper sealable unit suitable for containing a metal fluoride material in the solid or liquid state, the upper unit having an opening in the bottom thereof and having a sealable port in the top and bottom the unit to permit the passage of material into and out of the unit, the bottom port being in communication with the opening in the bottom of the unit;
(b) a middle sealable unit having a sealing port in the top and bottom thereof, the middle unit further having a upper shaped interior, a lower shaped interior, an opening in the bottom of the upper shaped interior communicating with the lower shaped interior, and an opening in the bottom of the lower shaped interior communicating with the bottom sealable port,
   wherein the upper shaped interior is suitable for receiving and melting a solid metal fluoride material received from the first unit or for containing liquefied metal fluoride material received from the first unit, and
   wherein the lower shaped interior is suitable for receiving solid particles formed by dropping and cooling liquefied metal fluoride from the upper shaped interior thorough the opening in the bottom of the upper shaped interior into the lower shaped interior; and
(c) a lower unit for receiving solid particles from the lower shaped interior of the middle unit, the lower unit having a sealable opening in the top and bottom thereof to allow transfer of solid material into and out of the lower unit. The middle unit can optionally contain a nozzle assembly for atomizing the liquefied metal fluoride dropped from the upper shaped interior, the nozzle assembly being located below and adjacent to the bottom of the opening in the bottom of the upper shaped interior, and having one or a plurality of nozzles for projecting a high velocity gas stream toward the liquefied metal fluoride, a source of the gas and a gas connection from the gas source to the nozzles. The top, middle and lower units of the modular apparatus of the invention can be separated from one another in a sealed state. Each of the modular units can also have ports for thermocouples or other temperature measuring equipment, the application of vacuum, and the entry and exit of gases.

The apparatus and method of the invention can be used to prepare spherical or substantially spherical particles of a metal fluoride selected from the group consisting of calcium fluoride, magnesium fluoride, barium fluoride, strontium fluoride, lithium fluoride and potassium fluoride; or from mixtures of such fluorides.

### Brief Description of the Drawings

Figure 1 illustrates an embodiment of the apparatus that can be used to prepare the atomized spherical particles, both being in accordance with the invention.
Figure 2 is illustrates an embodiment of the invention having a removable plug extending through the top of the furnace of Figure 1 to seal the opening in the melt crucible contained within.
Figure 3 illustrates an embodiment of the invention having a sealable, removable vessel or container for transporting atomized spherical particles made in accordance with the invention.
Figure 5 illustrates an embodiment that is a modular apparatus having units for preparing and transporting atomized spherical particles made in accordance with the invention.

### Detailed Description Of The Invention

The invention will now be described in detail with reference to a few preferred embodiments as illustrated in the accompanying drawings. In the following description numerous details are set forth in order to provide a thorough understanding of the invention. However, it will be apparent to one skilled in the art who reads this specification that the invention may be practiced without some of these specific details. In addition, well-known features and/or process steps have not been described in detail in order to not unnecessarily obscure the invention.

As used herein, the term "metal fluoride" means metal fluorides of general formulas MF₂ and M'F, where M is calcium, magnesium, barium or strontium, and M' is potassium or lithium. The term also includes "mixed metal fluorides"; for example, combining calcium fluoride and magnesium fluoride powders in any proportions to prepare beads of MgF₂/CaF₂. Herein, calcium fluoride is used as the exemplary material and it is to be understood that it is representative of other metal fluoride materials that can also be used in accordance with the invention. Also as used herein the terms "rounded powder", "spherical or substantially spherical beads", "spherical or substantially spherical particles" refer to the particles made using the apparatuses and methods described herein, and the terms are to be understood as meaning that the particle's shape approaches that of a sphere (as opposed to a cone, cylinder, cube or other non-spherical shape). The particle may, for example, be oblate, slightly oval, or have other deviations from a spherical shape.

Metal fluoride powders used is practicing the invention can be used in combination with scavenger agents to convert any oxygen containing species present to metal fluoride compounds during the bead formation process or to prevent the formation of such oxides and hydroxides during the bead formation process. For example, due to the presence of oxygen and/or water vapor, species such as CaO, Ca(OH)₂ or Ca(OH)F may be present in the powder. These scavenger agents are well known in the art and include, among others, PbF₂, SnF₂, CF₄ and other fluorocarbons. Combinations of scavengers can also be used. For example, solid PbF₂ or SnF₂ can be mixed with the powder and the beads can be dropped in an atmosphere containing CF₄.

In practicing the invention any type of furnace capable of reaching temperatures sufficient to melt the metal fluoride powders can be used. Such furnaces may be equipped with temperature sensing devices, ports for the application of vacuum and for the entry and exit of gases that may be used in the process. The furnaces are also equipped or modified with particular elements in accordance with the invention as described herein. Such furnaces are known to those skilled in the art. A Bridgman type furnace is one example of a furnace that can be used in practicing the invention. Other furnace types that can be used in practicing the invention are known and will be recognized by those skilled in the art.

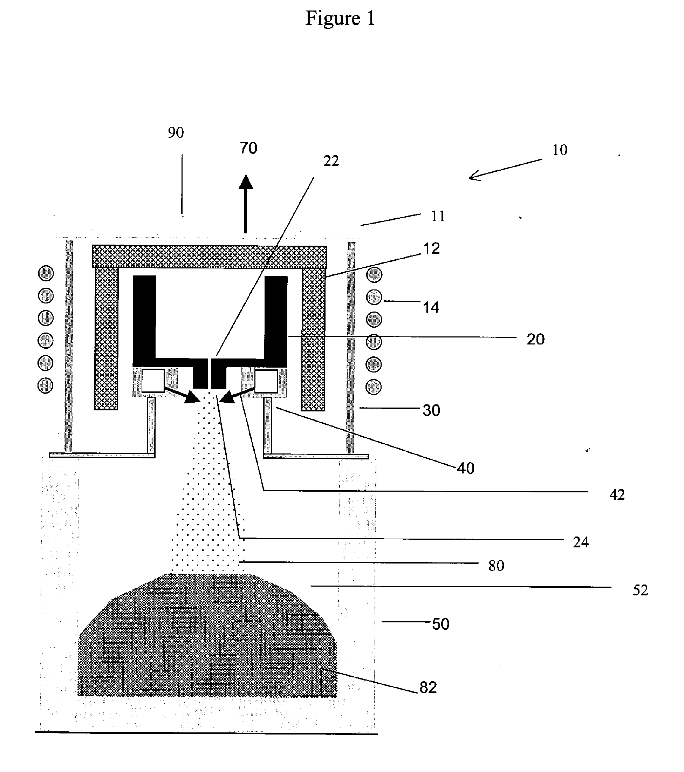

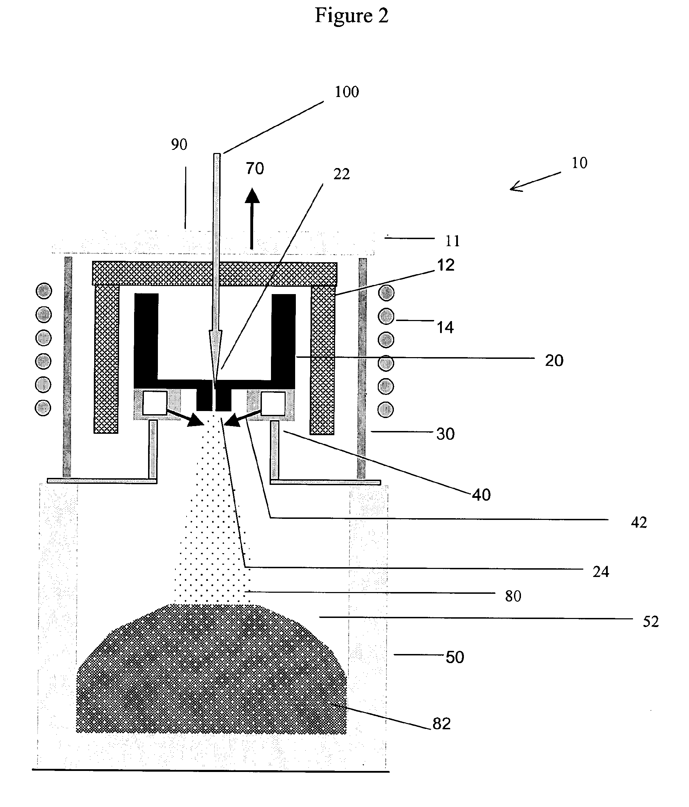

Referring now to Figure 1, the Figure illustrates an apparatus 10 having a top part 11, insulation 12; an induction heater 14; a crucible 20 having a opening 22 in its bottom; a quartz or other type of transparent, high temperature tube 30 located between the induction heater 14 and the insulation 12 to enable one to view the formation of the atomized, spherical powder 80 made according to the invention; a gas blowing nozzle assembly 40 having one or a plurality of nozzles for blowing a gas, illustrated by the broad arrows, toward the liquid metal fluoride dropping out of crucible 20 through opening 22 , the assembly being made of a material capable of withstanding the temperatures within the apparatus 10 (for example, making the nozzle assembly of titanium, high temperature stainless steel, graphite, pyrolytic graphite, molybdenum and similar materials capable of withstanding high temperatures; graphite, pyrolytic graphite, molybdenum being preferred); and a first container 50 forming a chamber 52 for receiving and containing the atomized, spherical powder made according to the invention, the product atomized spherical product being illustrated at 82. The opening 22 at the bottom of crucible 20 can also have a removable cover (not illustrated) as indicated by line and numeral 24 to contain liquefied metal fluoride melt material within crucible 20 until such time as the atomization process begins. Alternatively, a movable plug 100, illustrated in Figure 2 by the grey block arrow, can be used to seal opening 22 in crucible 20. As illustrated in Figure 2, the plug arm can extend through insulation 12 and top 11 of apparatus 10. In addition to the vacuum exhaust opening illustrated as 70, the apparatus can also have one or a plurality of ports 60 (not illustrated) for the admission of a scavenging gas, a purge gas or other gaseous materials, and for the exit of gases.

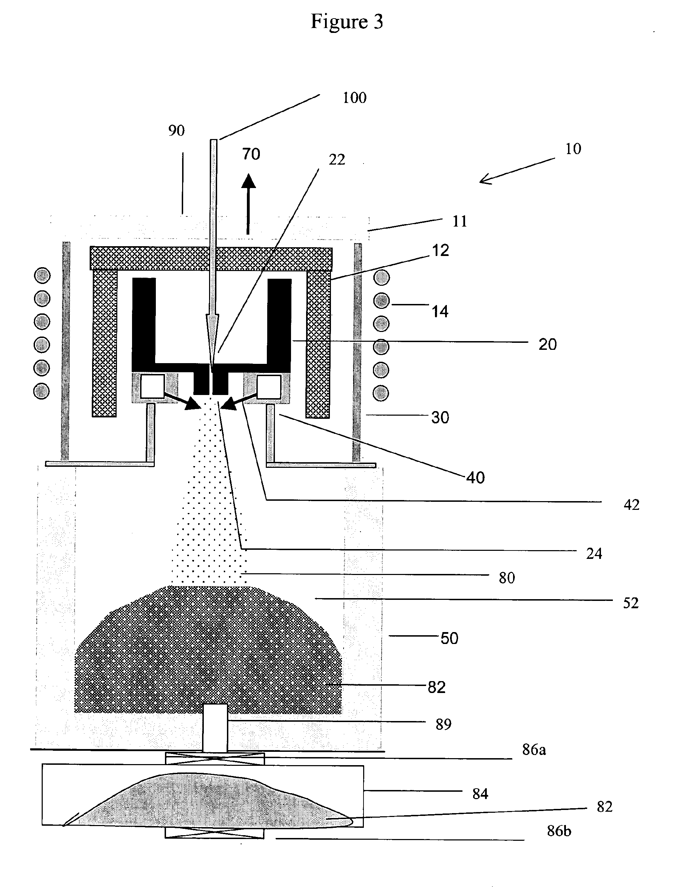

Figure 3 illustrates a further embodiment of the invention. In Figure 3 the apparatus has a second container 84 situated below the first container 50 that is also illustrated in Figures 1 and 2. Second container 84 has sealable ports 86 and is constructed such that it can maintain a vacuum or maintain a gas at pressures above and below atmospheric pressure, for example, an inert gas such as argon or an oxygen/water scavenging gas such as BF₃. Second container 84 communicates with first container 50 via sealable port or opening 89 at the bottom of first container 50 and a sealable port 86, and a second sealable port 86 may be present between the containers 50 and 84 to insure that both containers are sealed when container 84 is removed. Metal fluoride material 82 collected in container 50 may be transferred to container 84 by opening the port(s) 86 between the two containers and allowing the material 82 in container to fall into container 84 by gravity or under pressure of a gas present on chamber 52. After filling, container 84 may be moved to storage or to, for example, a crystal growth furnace equipped for receiving container 84. The metal fluoride material 82 in container 84 may then be transferred to a crucible or other vessel in the growth furnace and used for growing metal fluoride crystals. Container 84 may also have ports (not illustrated) for applying vacuum or the entry and exit of gases.

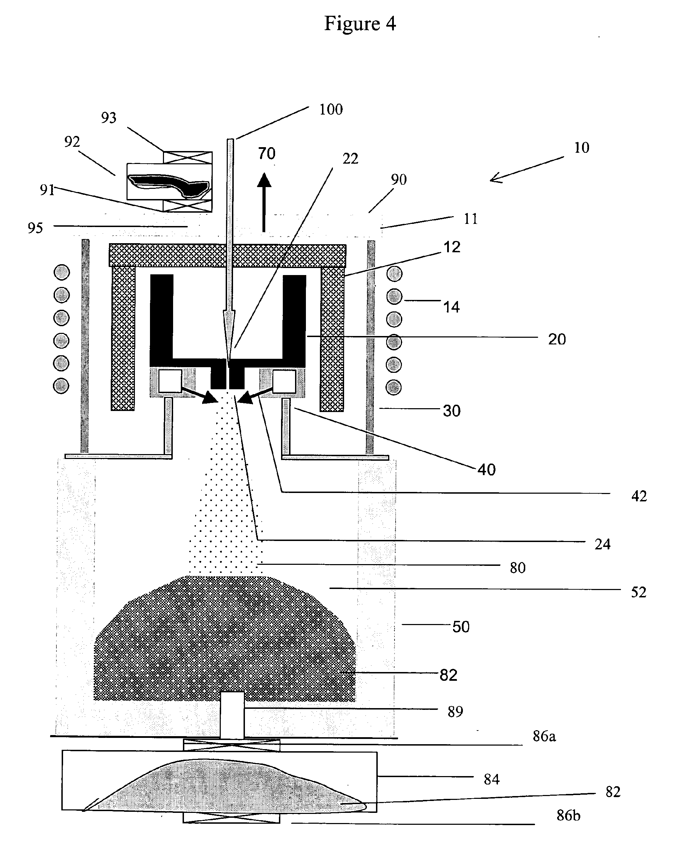

In a further embodiment of the apparatus of the invention as represented by Figure 4, the apparatus as illustrated in any of Figures 1-3 may be adapted to have a port 95, preferably sealable as illustrated by element 91, in top 90 for placement of a unit 92 holding a metal fluoride powder or liquefied metal fluoride material (represented by the shaded area within unit 92). Once unit 92 is position and sealed to top 90, the contents of unit 92 can be transferred to crucible 20. Unit 90 can also have a sealable port 93 on its top as illustrated at 93. In practicing the invention, units 92 can be replaced as they are emptied. A unit 92 can be charged with a metal fluoride material, purged for oxygen and/or water, heated in the presence of a water/oxygen scavenger, and have its contents liquefied in a separate step as desired. This enables continuous dropping of materials to form beads without having to open the dropping. As a result, economies are achieved and the cost of preparing metal fluoride beads is reduced.

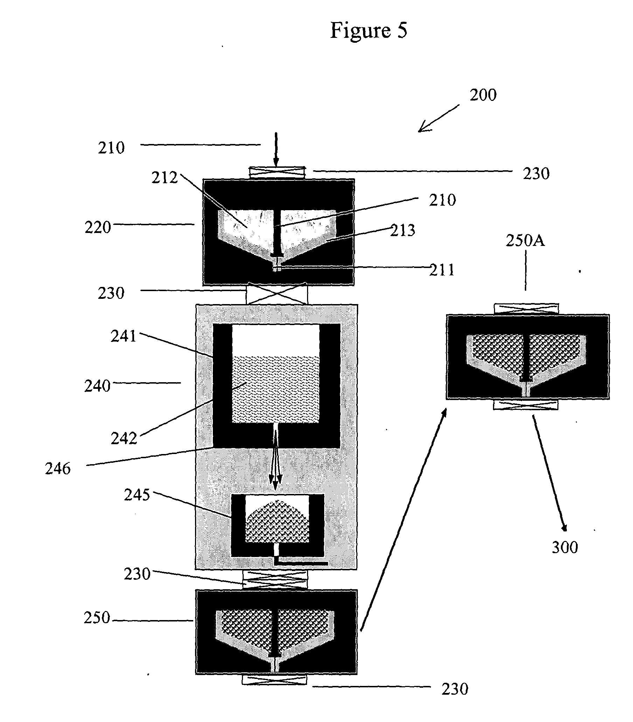

Figure 5 illustrates a further embodiment of the invention in which the apparatus 200 is in modular form. The apparatus has an upper sealable unit 220, a middle furnace unit 240 and a lower unit 250, all of which are connected as illustrated by one or two sealable ports 230. Each of the foregoing units may also have ports for the application of vacuum or the entry and exit of gases; and may also be equipped with temperature sensing devices such as thermocouples.

Upper unit 220 has a shaped interior or vessel 213 for holding a metal fluoride powder 212; an upper and lower sealable port 230; a closing element 210 for closing opening 211 that communicates with lower port 230; and also one or more ports (not illustrated) for use in applying vacuum or permitting the entry and exit of a gas, for example, an inert gas, a water/oxygen scavenging gas or a mixture of the two. Suitable materials for making units 220, 240 and 250 include, among others, titanium, stainless steel, molybdenum, graphite, and pyrolytic graphite. Shaped interior 213 (and the shaped interior or vessels of units 240 and 250) may be of the same material as unit 220 (or units 240 or 250 as the case may be) or it may be a lining of a selected material, for example, non-porous graphite. Unit 220 may also have heating elements (not illustrated) for heating the contents of the vessel within the unit. Alternatively, in whole or in part (for examples, the sides), the unit may be made of a material such as Pyrex® or quartz and the heating may be done by induction. A metal fluoride powder is admitted into unit 220 through upper port 230, and the powder may be degassed by application of vacuum. The powder may then be transferred from unit 220 to unit 240 through lower port 230. Alternatively, after degassing the powder may then be heated in the presence of an inert gas, a water/oxygen scavenging gas or a mixture of the two, and contents treated for a selected time at a selected temperature. As another alternative, the powder may be brought to liquid state in unit 220 and transferred to unit 240 in the liquid state.

Unit 240 may be termed the purification and bead formation unit of the apparatus and is similar to the apparatus shown in Figure 1 with regard to elements and function. Unit 240 includes an upper shaped interior or vessel 241 and a lower shaped interior or vessel 245, and ports 230 at the top and bottom of unit 240 for communication with units 230 and 250, respectively. Unit 240 also has one or a plurality of heating element associated therewith (not illustrated) for melting metal fluoride powder admitted to shaped interior 241. Alternatively, in whole or in part (for examples, the sides), the unit 240 may be made of a material such as Pyrex® or quartz and the heating may be done by induction. The heating elements may be individually controlled as desired. Upper vessel 241 has an opening 246 in the bottom, similar to opening 24 in Figure 1, to allow molten metal fluoride within vessel 241 to drop through and form a spherical product. Opening 246 may also be closable; for example, by having a removable cover (or a plug as illustrated in Figure 2) to contain liquefied metal fluoride within vessel 241 until such time as it is desired to begin a dropping process or an atomization process.

Still referring to Figure 5, the spherical product can be formed either by gravity dropping or can be formed by atomizing the melt using a nozzle assembly (not illustrated) similar to assembly 40 in Figure 1. The nozzle assembly would be located just below the opening of vessel 241. The spherical beading formed by dropping or atomizing is collected in vessel 245 which is similar to container 50 in Figure 1. Vessel 245 has an opening in the bottom thereof for transferring metal fluoride beads from vessel 245 beads into unit 250. The opening at the bottom of lower vessel 245 can be closed by means of a lever as illustrated (un-numbered) or similar element. After the transfer is completed, the ports of unit 250 and the bottom port of unit 240 are closed. Unit 250 may then removed and placed in storage. Alternatively, unit 250 may be moved to a position represented by numeral 250A on top of a crystal growth furnace represented by numeral 300, and the material in unit 250 on top of furnace 300 may be transferred, as represented by the arrow, into a vessel suitable for growing single crystals that is located within furnace 300. A single crystal or a metal fluoride may then be grown within furnace 300 according to methods known in the art.

In an alternative embodiment, port 230 at the bottom of unit 220 is two ports 230, one associated with unit 220 and the other with unit 240. Operationally, one may close both ports 230 and a unit 220 that has exhausted it metal fluoride content can be removed and replaced with a unit 220 that is charged with a metal fluoride. Once the new unit 220 is in place, the ports 230 associated with units 220 and 240 are opened to permit communication between them and the process continues as described above. Further, oxygen and water can be scavenged from a unit 230 prior to its placement on top of unit 240 by methods as described above or known in the art.

Now referring back to Figure 1, the opening 22 at the bottom of crucible 20 is sized to allow the liquid metal fluoride material within the crucible to flow out as a liquid stream or jet. Typical openings are in the range of 1.5 to 7 mm, with smaller openings producing finer atomized particles. Openings in this range permit mass flows in the range of 3 to 1200 kg/hr through the opening. The nozzles of assembly 40 direct the passage of a high velocity gas flow from a gas source 42 (not illustrated) toward the liquid stream coming from opening 22. The high velocity gas stream atomizes the liquid stream from opening 22 into droplets and also contributes to the cooling and solidification of the droplets into a solid powder whose particles have an essentially spherical shape. The atomizing gas is fed into the apparatus at a pressure in the range of 3-30 atmospheres. The gas is preferably free of or substantially free of oxygen and water vapor. The gas can be dried according to methods known in the art. The teachings of this paragraph also apply to the apparatus of Figures 2-5 using the nozzle assemble disclosed herein.

There is a relationship between the size of the opening 24 for dropping molten fluoride material and the size of the beads or particles that are formed However, in addition to the diameter of opening 24 other factors also in enter into the final determination of the product size. These are the design of the nozzle assembly (for example, the number of nozzles and nozzle opening diameter), the gas feed pressure, and distance of the nozzles from the stream of liquefied metal fluoride material coming out of opening 24. For example, for making 0.05 mm particles the opening 24 is approximately 2 mm in diameter and the atomizing gas is supplied at a pressure of approximately 5 atmospheres. Increasing the gas pressure, reducing the diameter of opening 24, and/or moving the nozzles closer to the molten stream will result in smaller beads or particles. Increasing the diameter of the opening with the gas pressure remaining at 5 atmospheres will result in larger diameter beads or particles. Other variations or combination of variations that will produce different size beads or particles will be apparent to one skilled in the art.

Additional gas flow can be provided into chamber 52 in which the particles are cooled. The additional gas may be admitted though ports 60 (not illustrated), and the gas may be an oxygen and/or water scavenging gas or may contain an oxygen and/or water scavenging gas such as CF₄. Similarly, such additional gas flow may be provided to the lower shaped interior 245 of unit 240 illustrated in Figure 5.

As mentioned above, the assemblies used to make the spherical beads described in FR 2,799,194 require a height of several meters. For example, making beads having a diameter of 0.25 mm requires a drop height in excess of 5 meters. In contrast to FR 2.799,194, the present invention will prepare beads having a diameter of 0.25 mm with a drop height of in the range of 0.8-1.4 meters. In addition, by adjusting parameters such as the gas flow in the nozzles and the diameter of the opening in the bottom of the crucible 20 or upper shaped inter 241, a range of spherical particles can be produced. Different sized particles can then be blended together to optimize the apparent density of the material when it is packed into a growth crucible for making a metal fluoride single crystal. For example, for calcium fluoride, crucible packing densities in the range of 2.4 to 3 g/cm³ have been obtained using the atomized spherical powder of the invention. This packing density is very close to the apparent density of 3.18 g./cm³ for a calcium fluoride single crystal.

In practicing the invention it is preferable that the apparatus be conditioned to remove any oxygen and/or water vapor present on the apparatus' surface that will be in the presence of the liquid fluoride material or the atomized particles produces in accordance with the invention. This can be accomplished by admitting a heated oxygen/water-vapor reacting gas to the apparatus, including chamber 52, prior to commencing production of the atomized particles. One can also heat the contained 50 by the placement of external heaters 54 (not illustrated) around the container. The units of the apparatus of Figure 5 can be similarly treated.

The apparatus and method of the invention can be scaled to have a material throughput in the range of 800-1200 kg/hr. Additionally, the apparatus and method can be made continuous. For example, in order to make the process continuous, clean metal fluoride powder or melt can be admitted through an opening in the top 90 of the apparatus in Figures 1-3 and also shown as 95 in Figure 4, by placement of a replaceable unit 92 as also illustrated in Figure 4 and described above, or by replacement of unit 220 illustrated in Figure 5. By making the process continuous one can further increase output of atomized spherical powder and also avoid having to re-treat the internal surfaces of the apparatus to remove oxygen and/or water vapor every time the material in crucible 20 or unit 220 is exhausted and the apparatus opened to re-charge the crucible.

MF₂ and M'F single crystals using the atomized spherical powders of the invention, or dropped bead when the atomizing nozzles are not used, can be made by the Stockbarger method (see J. Opt. Soc. Am. **14**, 448 (1927)); the Bridgeman-Stockbarger, Kyropulos and Czochralski methods known in the art; the methods described in U.S. Patent Nos. 6,485,562, 6,402,840, 6,364,946, 4,521,272 and 4,404,172; and other methods known in the art. The single crystals made using the spherical particles of the invention can be made into optical blanks and optical elements suitable for use in optical lithography systems; for example, excimer laser lithographic systems operating at 193 and 157 nm.

### EXAMPLE

### A. Referring to the Apparatus of Figures 1-3.

As an example a method of using an apparatus according to the invention to make spherical particles, a calcium fluoride feedstock containing 0.1-3 wt% PbF₂ scavenging agent is charged into crucible 20 of Figure 1. The removable lid indicated as 24 (but not illustrated) at the exit of opening 22 is in place at this time to prevent powder or melt from exiting until it is time to atomize the melt. The crucible and its contents are heated under vacuum to a temperature in the range of 300-500 °C for a time in the range of 3-24 hours in order to drive off oxygen and water vapor present on their surfaces. The Pyrex® tube or other materials used in construction of the interior of the apparatus and the nozzle apparatus may be heated as well during this step. Further heating, up to the melting point of the crucible content is then performed. If a solid scavenger has been added it will convert any unwanted species such as CaO of CaF(OH) to CaF2. As another alternative, an oxygen/water-vapor scavenger gas may be admitted to the apparatus during at least part of this time to achieve the same result. The feedstock can be maintained as a melt for a selected period of time, for example, 1-4 hours, to insure complete removal of oxygen, water vapor, etc. The removable lid is then removed and the liquefied, purified feedstock is allowed to pass through opening 22 at the bottom of crucible 20 where it then contacts the high velocity gas stream from the nozzles of assemble 42. The liquid stream is atomized into particles 80 that cool as they fall through chamber 52 of container 50. The particles collected as shown at 82 in Figure 1 and are used to grow single crystal.

### B. Referring to the Apparatus of Figure 5.

In a method similar to "A" above, metal fluoride powder is charged to upper unit 220 of Figure 5. The opening 211 in the bottom of the unit is closed and/or port 230 is closed to prevent the powder from falling into unit 240. The unit is heated as described above, purged with an inert gas, and subsequently filled with a mixture of a scavenger gas and an inert gas, or with only a scavenger gas. After a selected time deemed sufficient to treat the metal fluoride material, communication between unit 220 and 240 is established and the treated metal fluoride powder is allowed to fall into upper interior 241 of unit 240 where it is melted and additionally treated if deemed necessary to remove contaminants such as, for example, CaO and CaF(OH). This can be done by addition treatment with a scavenging gas or the presence of a solid scavenger such as PbF₂, SnF₂ or other solid scavenging agent known in the art, or both.

When the metal fluoride has melted, communication between the upper and lower shaped interiors 241 and 245 is established and the liquefied metal fluoride is allowed to flow through opening 246 at a rate sufficient to form droplets which are cooled and collected within lower shaped interior 245. Alternatively, a stream of liquefied metal fluoride from opening 246 encounters a gas from a nozzle assembly located below the opening and is atomized into droplets that cool as they fall. The cooled droplets are collected within vessel 245. The droplets within vessel 245 are subsequently transferred to unit 250. After sealing, unit 250 is moved to storage or to a crystal growth furnace where the spherical particles are transferred to a crystal growth crucible and used to grow a metal fluoride single crystal by methods known in the art.

In an alternative embodiment, the metal fluoride powder is melted with unit 220 and transferred as a liquid from unit 220 to unit 240. The melting can occur either while unit 220 is positioned on top of unit 240 or it can occur in a separate location by use of heaters, or induction heating, as described elsewhere herein or as known in the art. In either case, once the liquefied metal fluoride is transferred from unit 220 to unit 240 the subsequent steps to form solid material are as described above.

As an example of growing metal fluoride single crystals, the foregoing particles from A or B are packed into a fluoride crystal growth crucible and placed in a crystal growth furnace. Advantageously, additional scavenger agent is mixed with the atomized particles, the amount of scavenger being in the range of 0.5-3 wt%. The growth furnace may have one or two zones/ For example, the furnace may have a single common melting/annealing zone in which the feedstock is first melted by raising the temperature to above the melting point of the feedstock and then gradually lowering the temperature until the feedstock crystallizes. The crystal may then be annealed in a second annealing step in which the temperature is raised to below the melting point of the crystal and then gradually lowered to ambient temperature.

In a preferred embodiment, the feedstock is placed in a crucible having a receptacle at its bottom for the placement of a seed crystal, a crystal of selected orientation that is used to initiate crystal growth as is well known in the art. The crystal is then placed in a furnace having separated melting and annealing zones. The crucible is raised into the melting zone such that a top part of the seed crystal in contact with the feedstock will melt while the remainder of the seed crystal remains unmelted. The feedstock is then melted and when melted the entire crucible is lowered into the annealing zone. The temperature of the melting zone is sufficient to melt all the feed stock and the temperature of the annealing zone is les than the melting temperature of the feedstock and/or single crystal. A temperature gradient exists between the two zones and crystallization occurs as the crucible transitions through this zone. Once the single crystal has been fully formed and the crucible has been translated into the annealing zone, the temperature of the annealing zone is slowly lowered to ambient temperature. The temperature lowering can be done at a single constant rate; for example, at a rate in the range of 2-20 °C per hour, preferably at a rate in the range of 2-10 °C per hour, and more preferably at a rate of 2-5 °C per hour. A profiled rate of temperature decrease can also be used. For example, the temperature can first be lowered from just below the melting point of the crystal to about 150 °C below the melting point at a rate in the range of °C per hour. This is then followed by a second temperature lowering at a rate of in the range of 10-20 °C for the next 200-300 °C. Finally the temperature can be lowered to ambient temperature at a third rate in the range of 20-50 °C until ambient temperature is reached. Other temperature profiles disclosed in the art can also be used.

The single crystal so formed can be subjected to a secondary annealing process to remove birefringence. A preferred method of secondary annealing is to heat the crystal to a temperature in the range of 50-150 °C below is melting point and then slowly lowering the temperature in the secondary annealing step to ambient temperature. The temperature is preferably lowered at a rate in the range of 1-10 °C per hour, preferably at a rate in the range of 2-5 °C per hour. A temperature can also be lowered in profiled manner as described in the previous paragraph. It is preferred that when a profiled method is used the initial rate of lowering be range of 2-5 °C for the first 100-200 °C that the temperature is lowered, followed by a further lowering at a rate in the range of 5-10 °C to the next 100-200 °C. Subsequently the rate of cooling can be increased; for example, to the second and third rated described in the previous paragraphs. Secondary annealing improves the optical qualities of the single crystals by eliminating or substantially decreasing undesirable qualities such as the presence of birefringence in the single crystal. The grown and annealed crystal can then be processed by method known in the art into optical blanks and optical elements suitable for optical lithographic and other processes in which it is desirable to use metal fluoride optical elements.

By way of reference, the melting points of the alkali and alkaline earth metal fluorides, taken from the Handbook of Physics and Chemistry, 48^{th} Ed. (CRC Publishing Co., New York 1967) are: CaF₂ ( 1360 °C), MgF₂ (1266 °C), BaF₂(1280 °C), SrF₂ (1450+ °C), LiF (842 °C), and KF (846 °C). When LiF and KF are used to make single crystals, the temperature ranges may be proportionally (to the MF₂ species) decreased as one skilled in the art will understand

The foregoing examples of specific compositions, processes, articles and/or apparatus employed in the practice of the present invention are, of course, intended to be illustrative rather than limiting, and it will be apparent that numerous variations and modifications of these specific embodiments may be practiced within the scope of the appended claims.

*Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.*

## Claims

1. An apparatus for producing atomized particles of alkali and alkaline earth metal fluorides, the apparatus comprising:
a heating zone comprising a furnace with heating elements for melting a metal fluoride powder to form a liquefied metal fluoride, and
a crucible for containing the metal powder, the crucible having an opening in the bottom thereof for passage of the liquefied metal fluoride and a removable lid at the exit of said opening; and
a dropping zone comprising a nozzle assembly located below and adjacent to the bottom of the opening for atomizing the liquefied metal fluoride, the nozzle assembly comprising one or a plurality of nozzles for projecting a high velocity gas stream toward liquefied metal fluoride exiting from the opening at the bottom of the crucible, a source of the gas and a gas connection from the gas source to the nozzles;
a first container forming a chamber for receiving solid particles of the atomized metal fluoride, the container having a height sufficient for allowing the atomized particles to cool to a temperature at which they will not agglomerate.

2. The apparatus according to claim 1, wherein the furnace has ports for the admission of temperature sensors and the entry and exit of gaseous materials.

3. The apparatus according to claim 1 or claim 2, wherein said container has a port in the bottom thereon for allowing solidified metal fluoride particles to be withdrawn from the chamber formed by the first container.

4. The apparatus according to any one of claims 1-3, wherein said furnace has a port in the top thereof for loading additional metal fluoride powder or premelted metal fluoride into the crucible.

5. The apparatus according to any one of claims 1-4, wherein the gas is supplied to the nozzles at a pressure in the range of 5 to 30 atmospheres.

6. The apparatus according to any one of claims 1-5, wherein the diameter of the opening in the bottom of the crucible is in the range of 1.5 to 7 mm.

7. The apparatus according to any one of claims 1-6, wherein said apparatus further comprises:
a sealable opening in the bottom of the first container;
a second container attached to the first container, said second container having top and bottom sealable openings for receiving material from said first container and discharging material from said second container, respectively;
wherein said second container is capable of maintaining a vacuum or a gas therein at below to above atmospheric pressure.

8. The apparatus according to any one of claims 1-7, wherein the temperature of the dropping zone is less than the temperature of the heating zone.

9. A method for preparing metal fluoride particles said method comprising:
providing a furnace in accordance with any one of claims 1-8
placing a metal fluoride powder in said crucible;
melting the metal fluoride to provide a liquefied metal fluoride,
passing the liquefied metal fluoride through the opening in the bottom of the crucible;
contacting the liquefied metal fluoride with a high velocity gas from said nozzles to thereby atomize said liquid;
allowing said atomized liquid to fall a distance sufficient for said atomized liquid to form solid particles and to reach a temperature such that said particles do not agglomerate; and
collecting said particles in a container.

10. The method according to claim 9, where the metal fluoride is selected from the group consisting of calcium fluoride, magnesium fluoride, barium fluoride, strontium fluoride, lithium fluoride and potassium fluoride.

11. A modular apparatus according to any one of claims 1-6 for producing atomized particles particles of alkali and alkaline earth metal fluorides, the modular apparatus comprising:
an upper, a middle and a lower unit, each of said units having sealable ports on the top and bottom thereof for entry and exit of material from said unit;
wherein
(a) the upper unit is suitable for containing a metal fluoride material in the solid or liquid state, said upper unit having at least an opening in the bottom in communication with the bottom sealable port to permit the passages of material into and out of the unit, said bottom port being in communication with the opening in the bottom of the unit;
(b) the middle unit which has an opening at the top for receiving metal fluoride from the upper unit and which comprises the said heating zone, the said crucible and
a lower shaped interior comprising the said dropping zone and the said first container; and
(c) the lower unit is for receiving solid particles from the lower shaped interior of the middle unit;
wherein said top, middle and lower units can be separated from one another in a sealed state.

12. A modular apparatus for producing particles of alkali and alkaline earth metal fluorides, the apparatus comprising:
(a) an upper sealable unit suitable for containing a metal fluoride material in the solid or liquid state, said upper unit having an opening in the bottom thereof and having a sealable port in the top and bottom said unit to permit the passages of material into and out of the unit, said bottom port being in communication with the opening in the bottom of the unit;
(b) a middle sealable unit having a sealing port in the top and bottom thereof, said unit further having a upper shaped interior, a lower shaped interior, an opening in the bottom of the upper shaped interior communicating with the lower shaped interior, and an opening in the bottom of the lower shaped interior communicating with the bottom sealable port,
wherein said upper shaped interior is suitable for receiving and melting a solid metal fluoride material received from said first unit or for containing liquefied metal fluoride material received from said first unit, and
wherein said lower shaped interior is suitable for receiving solid particles formed by dropping and cooling liquefied metal fluoride from said upper shaped interior thorough the opening in the bottom of the upper shaped interior into said lower shaped interior; and
(c) a lower unit for receiving solid particles from the lower shaped interior of the middle unit, said lower unit having a sealable opening in the top and bottom thereof to allow transfer of solid material into and out of the lower unit;
wherein said top, middle and lower units can be separated from one another in a sealed state.

13. The modular apparatus according to claim 12, wherein the middle unit further comprises a nozzle assembly for atomizing the liquefied metal fluoride dropped from said upper shaped interior, the nozzle assembly being located below and adjacent to the bottom of the opening in the upper shaped interior, and having one or a plurality of nozzles for projecting a high velocity gas stream toward the liquefied metal fluoride, a source of the gas and a gas connection from the gas source to the nozzles.
